# EUROPÄISCHE PATENTANMELDUNG

(11) **EP 2 199 634 A2**
(43) Veröffentlichungstag der Anmeldung: **23.06.2010**
(21) Anmeldenummer: 09177812.6
(22) Anmeldetag: 03.12.2009
(51) Int. Cl.: F16C 35/067

(54) **Maschine mit Lagervorrichtung**

(30) Priorität: 18.12.2008 DE 102008054848
(71) Anmelder: Robert Bosch GmbH, 70442 Stuttgart (DE)
(72) Erfinder: Maier, Uwe, 75233 Tiefenbronn (DE); Gamm, Oliver, 73054 Eislingen (DE); Baermann, Joachim, 72770 Reutlingen (DE); Schwarzkopf, Christoph, 74399 Walheim (DE)

(57) **Zusammenfassung**

Maschine mit einem Rotor (20), wobei der Rotor (20) mittels zumindest eines Festlagers (34) in einer Nabe (33) eines Gehäuses (13) gelagert ist, wobei das Festlager (34) als Wälzlager (28) ausgebildet ist und einen Außenring (35) aufweist, der mittels einer Halteplatte (31) am Gehäuse (13) befestigt ist, wobei zumindest ein Befestigungselement (36) die Halteplatte (31) am Gehäuse (13) hält, wobei die Halteplatte (31) einen Bereich (68) radial zwischen dem Befestigungselement (36) und einer zentralen Öffnung (65) in der Halteplatte (31) aufweist, der einen geringeren Biegewiderstand als diesem Bereich (68) in Umfangsrichtung (Öffnung) benachbarte Bereiche (69) aufweist.

## Beschreibung

### Stand der Technik

Aus dem Stand der Technik sind Maschinen, ausgeführt als Wechseistromgeneratoren bekannt, deren Rotor mittels eines Festlagers in einer Nabe eines Gehäuses gelagert ist. Das Festlager ist dabei als Wälzlager ausgebildet und weist einen Außenring auf, der mittels einer Halteplatte am Gehäuse befestigt ist. Üblicherweise sind drei oder vier Befestigungsschrauben vorgesehen, um die Halteplatte am Gehäuse zu befestigen und dadurch das Wälzlager bzw. dessen Außenring ortsfest zu halten. Eine derartige Lösung ist aus der deutschen Gebrauchsmusterschrift DE 298 18 190 U1 bekannt. Durch die Befestigung eines Kugellagers durch am Umfang verteilte Schrauben wirkt ganz besonders in dem Bereich eines Außenrings eine besonders hohe punktuelle Axiallast, an der eine derartige Schraube befestigt ist. Im Umfangsbereich zwischen zwei Schrauben ist demzufolge die Belastung geringer. Nachteilig ist hierbei, dass die hohe punktuelle Umfangslast eine Verformung des Außenrings zur Folge hat und demzufolge Laufbahnen für die Wälzkörper punktuell besonders stark vom idealzustand abweichen.

Demgegenüber besteht die Aufgabe, eine Befestigung für einen Lagerring eines Wälzlagers zu gestalten, die derartige Belastungen und damit einhergehende große Verformungen vermeidet.

### Offenbarung der Erfindung

Mit der vorgeschlagenen Lösung nach dem Anspruch 1, wonach die Halteplatte einen Bereich aufweist, der radial zwischen dem Befestigungselement und einer zentralen Öffnung in der Halteplatte angeordnet ist, der zudem einen geringeren Biegewiderstand als die Bereiche aufweist, die in Umfangsrichtung zu diesem Bereich benachbart sind, wird erreicht, dass die vom Befestigungselement ausgehenden Haltekräfte besser verteilt werden und somit weniger Belastungsspitzen am Befestigungselement wirken. Die damit einhergehende Verformung des Außenrings ist in der Folge verringert, die Laufbahn der Wälzkörper ist damit weniger stark von der Idealbahn abweichend, Das Lager wird demzufolge länger halten.

Weitere Vorteile ergeben sich aus den Unteransprüchen. Wird der geringere Biegewiderstand des Bereichs durch eine in Umfangsrichtung der Öffnung und in radialer Richtung begrenzte Schwächung der Halteplatte erzielt, so ist dadurch eine besonders einfache Gestaltung möglich. Eine Schwächung der Halteplatte kann hierbei beispielsweise dadurch erreicht werden, indem dieser Bereich beispielsweise punktuell weichgeglüht wird und demzufolge eine geringere Festigkeit aufweist. Desweiteren kann die Schwächung durch eine gegenüber den benachbarten Bereichen verringerte Materialstärke der Halteplatte verwirklicht sein. Hierzu kann beispielsweise die Halteplatte punktuell oder kleinflächig geprägt sein (unter Druck beispielsweise kalt umformen) und demzufolge ein Biegewiderstandsmoment verringert werden. Weist die zentrale Öffnung der Halteplatte im Bereich der verringerten Materialstärke einen kleineren Radius als an anderen Bereichen der Öffnung auf, so ist dies ein Ergebnis eines einfachen Herstellungsverfahrens für die Aussparung. Wird beispielsweise durch das bereits erwähnte kalte Umformen die Aussparung hergestellt nachdem die zentrale Öffnung hergestellt ist, so muss der Materialbereich, der wegen der herzustellenden zentralen Öffnung herausgeschnitten wird, nicht zusätzlich umgeformt werden. Der kleinere Radius ist demzufolge ein Resultat wirtschaftlicher Abläufe beim Herstellungsprozess der Halteplatte. Gemäß den Merkmalen des Unteranspruchs 5 kann eine besonders breite Elastizität der Halteplatte ermöglicht werden.

Ist der Bereich verringerten Biegewiderstands durch eine Aussparung verwirklicht, so ermöglicht diese Aussparung einerseits den verringerten Biegewiderstand und anderseits auch Materialersparnisse. Besonders effektiv ist die Verringerung der Belastung am Außenrand des Außenrings dadurch, dass jedem Befestigungsmittel und damit vorzugsweise jeder Schraube, die zur Befestigung der Halteplatte dient, eine Aussparung zugeordnet ist. Gleichfalls kann jedem Befestigungselement im Allgemeinen auch ein Bereich verringerten Biegewiderstands zugeordnet sein. In beiden Fällen gilt, dass die Aussparung und/oder der Bereich geringeren Biegewiderstands zwischen dem Befestigungsmittel und einem zentralen Mittelpunkt der einen Nabe, d. h. üblicherweise einer Drehachse, angeordnet ist. Eine besonders gute Wirkung des Bereichs verringerten Biegewiderstands wird dadurch erreicht, dass dieser im Bezug zu einem Zentrum der Nabe (Rotationsachse) eine Breite in Umfangsrichtung von ca. 15° bis 65° aufweist. Zur symmetrischen Belastungsverringerung soll der Bereich verringerten Widerstands im wesentlichen spiegelsymmetrisch zu einer Verbindungslinie zwischen dem Zentrum der Nabe und dem Befestigungsmittel angeordnet sein. Eine besonders gute Wirkung stellt sich dann ein, wenn der Außenring einen Überstand zur Nabe von ca. 0,04 bis 0,24 mm in axialer Richtung aufweist. Bei niedrigeren Werten verteilt sich die Belastung einer Halteplatte ohne einen geringeren Biegewiderstand wiederum stärker auf den Außenring, so dass die eingangs erwähnten Nachteile nicht zu schwer wiegen. Für die Bereiche oberhalb des erwähnten Wertes ist die Belastung auf einen Schraubenkopf bzw. ein Befestigungselement normalerweise verhältnismäßig hoch, so dass höhere Werte weniger sinnvoll sind.

Ein besonders einfaches und zuverlässiges Verfahren zur Herstellung des Bereichs verringerten Biegewiderstands ergibt sich dann, wenn dieser spanlos oder spanend hergestellt ist. Desweiteren sollen sich der Bereich verringerten Biegewiderstands und ein Durchgangsloch für das Befestigungsmittel in Axialrichtung gesehen nicht überschneiden. Dies vermeidet Wechselwirkungen zwischen der Schwächung der Halteplatte zwecks Lebensdauer des Lagers und einer zu stark geschwächten Halteplatte und demzufolge möglicherweise unzulässige Formveränderungen des Durchgangslochs. Es ist vorgesehen, dass die Maschine ein Erzeuger elektrischer Energie, vorzugsweise ein Wechselstrom- bzw. Drehstromgenerator ist.

### Kurze Beschreibungen der Zeichnungen

Die Erfindung wird im Folgenden beispielhaft anhand der Figuren näher erläutert:

Es zeigen
Figur 1 einen Längsschnitt durch einen Wechselstromgenerator,
Figur 2 eine Ansicht auf die Halteplatte aus Figur 1 von der Innenseite des Gehäuses aus gesehen,
Figur 3 eine Ansicht auf die Halteplatte aus Figur 2, jedoch von der anderen Seite der Halteplatte,
Figur 4 ein zweites Ausführungsbeispiel einer Halteplatte, wobei die Fläche gezeigt ist, die an einer Nabe des Gehäuses anliegt,
Figur 5 eine Ansicht auf die Halteplatte aus Figur 4 von der anderen Seite,
Figur 6 einen Querschnitt durch die Halteplatte gemäß dem zweiten Ausführungsbeispiel,
Figur 7 einen Querschnitt durch die Nabe, den Außenring des Lagers und die Halteplatte gemäß dem zweiten Ausführungsbeispiel in einer Einbausituation,
Figur 8 ein drittes Ausführungsbeispiel einer Halteplatte, wobei die Halteplatte nur ausschnittweise gezeigt ist,
Figur 9 ein viertes Ausführungsbeispiel einer Halteplatte, wobei auch hier die Halteplatte nur geneigt ist.
Figur 10 ein fünftes Ausführungsbeispiel einer Halteplatte, wobei auch hier die Halteplatte nur ausschnittweise gezeigt ist.

### Beschreibung

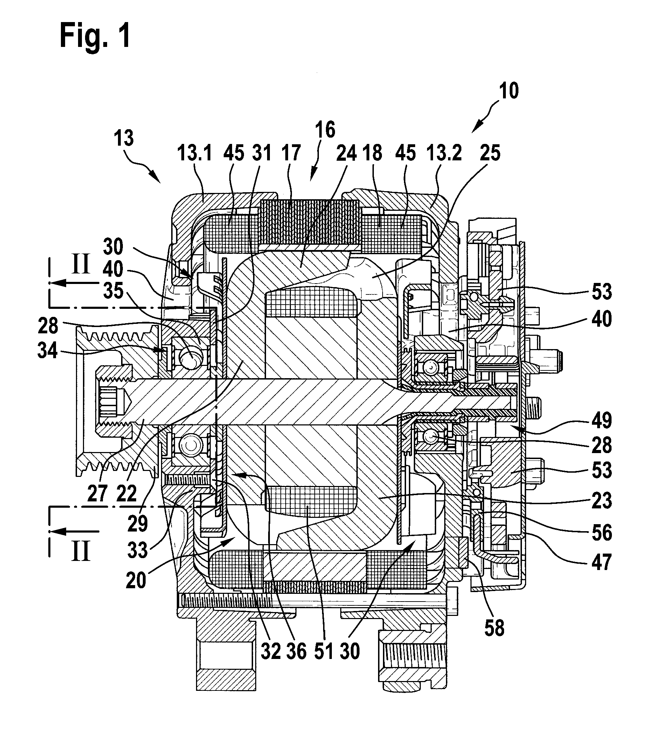

In Figur 1 ist ein Querschnitt durch eine elektrische Maschine 10, hier in der Ausführung als Generator bzw. Wechsel-, insbesondere Drehstromgenerator, für Kraftfahrzeuge, dargestellt, Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u.a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert. Die Welle 27 ist durch eine Riemenscheibe 29 antreibbar. Das antriebsseitige Wälzlager 28, jenes, welches der antreibenden Riemenscheibe 29 nächstgelegen ist, ist durch eine Halteplatte 31 ortsfest gehalten (Festlager 34). Die Halteplatte 31 verhindert dabei eine axiale Verschiebung eines Außenrings 35. Die Halteplatte 31 selbst ist durch mehrere Halteplattenschrauben 32 (Befestigungselemente 36) an einer Nabe 33 befestigt.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

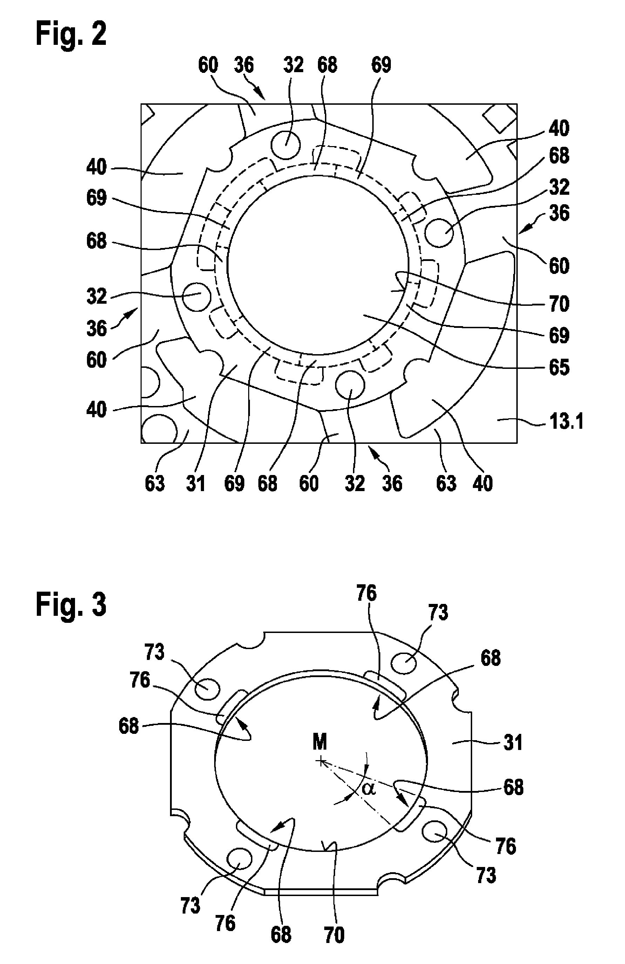

In Figur 2 ist eine Ansicht auf die Halteplatte von der Innenseite des ersten Lagerschild 13.1 dargestellt. In diesem Ausführungsbeispiel ist die Halteplatte 31 mittels vier Befestigungselementen 36 in Gestalt von Halteplattenschrauben 32 am Lagerschild 13.1 befestigt. Die vier Halteplattenschrauben 32 sind dabei in die Nabe 33 eingeschraubt, wobei an der jeweiligen Umfangsposition der Halteplattenschrauben 32 eine Stütze 60 die Nabe 33 und damit mittelbar auch das Wälzlager 28 abstützt. Die Stützen 60 selbst sind einstückig mit einem Außenring 63 des ersten Lagerschilds 13.1 verbunden. Die Halteplatte 31 weist in ihrer Mitte eine zentrale Öffnung 65 auf, durch die beispielsweise die Welle 27 hindurchragt. Die Halteplatte 31 weist bei jedem Befestigungselement 36 einen Bereich 68 auf, der einen geringeren Biegewidestand halt als Bereiche 69, die in Umfangsrichtung benachbart sind. Die Umfangsrichtung wird dabei durch die zentrale Öffnung 65 und deren Öffnungsrand 70 bestimmt.

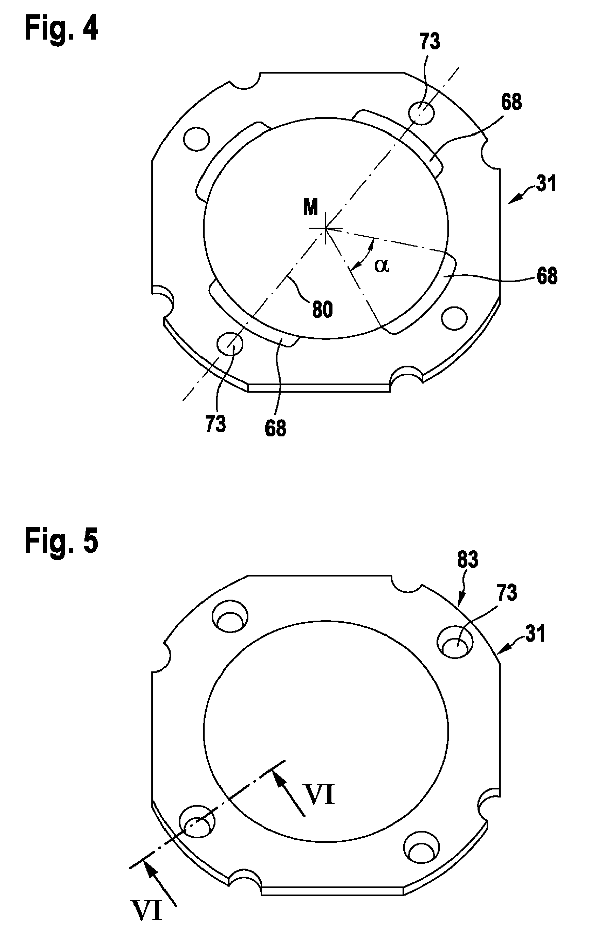

Figur 3 zeigt die Halteplatte 31 aus Figur 2 von ihrer anderen Seite. Diese hier vereinzelt dargestellte Halteplatte 31 hat über ihren Umfang verteilt vier Durchgangslöcher 73, durch die die Befestigungselemente 36 bzw. die Halteplattenschrauben 32 hindurch gesteckt werden. Zwischen diesen Durchgangslöchern 73 und dem Öffnungsrand 70 befinden sich als Bereiche 68, die einen geringeren Biegewiderstand als diesen Bereichen 68 benachbarte Bereiche 69 aufweisen, buchtartige Aussparungen 76 auf. Diese Bereiche 68 weisen demzufolge durch ihre Gestaltung einen geringeren Biegewiderstand als diesen Bereichen 68 benachbarte Bereiche auf. Dieser geringere Biegewiderstand des Bereichs 68 ist durch eine in Umfangsrichtung der Öffnung und in radialer Richtung begrenzte Schwächung der Halteplatte 31 ausgeführt. Die Schwächung ist hier durch Materialabtrag hervorgerufen. Dies bedeutet, dass eine zunächst ebene Halteplatte 31 an dieser Stelle beispielsweise durch Ausfräsung in ihrer Materialstärke verringert wurde. Statt eines derartigen spanenden Abtrags besteht beispielsweise auch die Möglichkeit, eine derartige Schwächung des Materials durch Prägung hervorzurufen. Ausgehend von einem Mittelpunkt M der zentralen Öffnung 65 kann bezüglich eines derartigen geschwächten Bereichs (Bereich verringerten Biegewiderstands) in Bezug zu einem Zentrum M der Nabe 33 eine Winkelbreite α in Umfangsrichtung von ca. 15° (Figur 3) bis 65° (Figur 4) vorgesehen sein.

In Figur 4 ist ein zweites Ausführungsbeispiel einer Halteplatte 31 dargestellt. Im Unterschied zum Ausführungsbeispiel nach Figur 2 und Figur 3 weist diese Halteplatte 31 einen bezüglich der Winkelbreite α veränderten Bereich auf. Der Bereich 68 verringerten Biegewiderstands weist hier in Bezug zu einem Zentrum M der Nabe bzw. einem Mittelpunkt der zentralen Öffnung 65 (Rotationsachse) eine Winkelbreite α von 65° auf. Desweiteren ist hier dargestellt, dass der Bereich 68 verringerten Biegewiderstands im Wesentlichen spiegelsymmetrisch zu einer Verbindungslinie 80 zwischen dem Zentrum M der Nabe 33 und dem Befestigungselement 36 angeordnet ist. Stellvertretend für das Befestigungsmittel 36, welches hier nicht eingezeichnet ist, besteht hier ein Durchgangsloch 73.

In Figur 5 ist eine Draufsicht auf die Halteplatte 31 gemäß dem zweiten Ausführungsbeispiel nach Figur 4 analog zur Darstellung in Figur 2 dargestellt, Die Durchgangslöcher 73 sind, wie hier deutlich zu erkennen ist, gesenkt. Dies bedeutet, dass die Durchgangslöcher 73 in diesem Fall eine konische Verbreiterung 83 aufweisen.

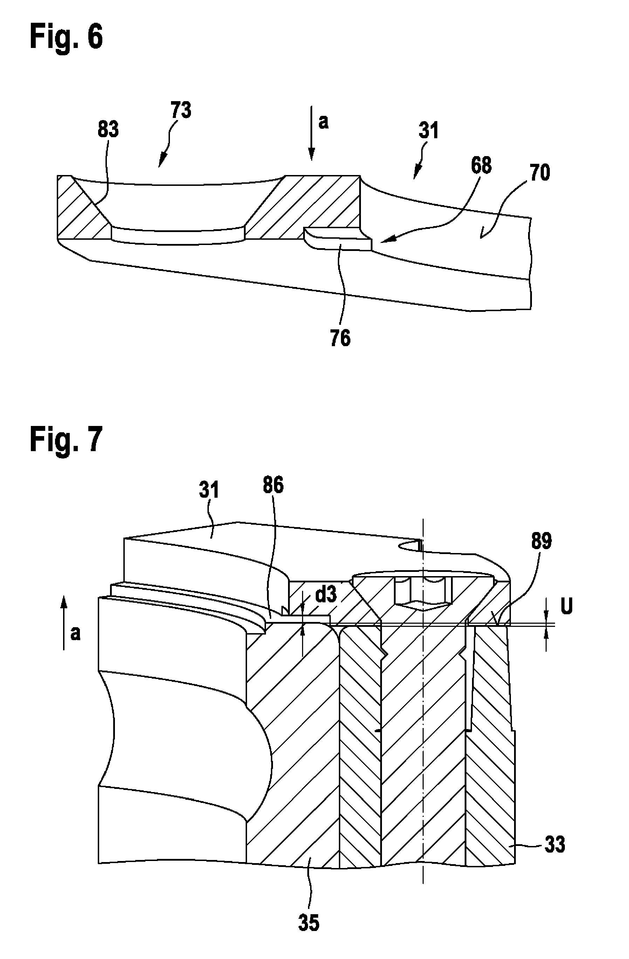

Figur 6 zeigt die Halteplatte 31 gemäß dem in Figur 5 eingezeichneten Schnitt. In diesem Schnitt ist die konische Verbreiterung 83 und auch das Durchgangsloch 73 gut zu erkennen. Dem Durchgangsloch 73 benachbart ist nach radial innen der Bereich 68 mit verringertem Biegewiderstand. In diesem Ausführungsbeispiel ist der Bereich 68 verringerten Biegewiderstands durch eine Aussparung 76 verwirklicht. Wie hier dargestellt, überschneiden sich der Bereich 68 verringerten Biegewiderstands und das Durchgangsloch 73 für das Befestigungselement 36 in Axialrichtung a gesehen nicht.

In Figur 7 ist dargestellt, dass der Außenring 35 mit seiner von der Ringscheibe 29 abgewandten Stirnfläche 86 über eine Stirnfläche 89 der Nabe 33 übersteht. Dieser Überstand ist mit dem Buchstaben U bezeichnet. Es ist vorgesehen, dass der Außenring 35 einen Überstand U zur Nabe 33 von 0,04 bis 0,24 mm in Axialrichtung a aufweist.

Zwischen der Aussparung 76 und dem Außenring 35 des Wälzlagers 28 liegt ein Abstand d3 vor. Es ist vorgesehen, dass dieser Abstand d3 mindestens 0,1 mm beträgt.

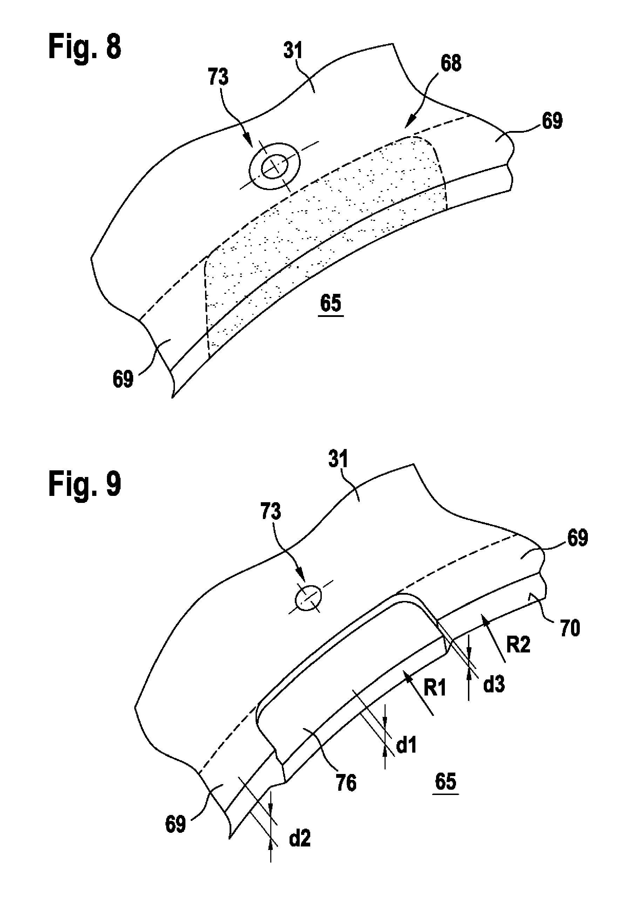

In Figur 8 ist ausschnittweise eine Halteplatte 31 dargestellt. Diese Halteplatte 31 weist hier ebenfalls einen Bereich 68 auf, der gegenüber benachbarten Bereichen 69 einen geringeren Biegewiderstand aufweist. Im Ausführungsbeispiel nach Figur 8 ist dieser Bereich 68 dadurch erzeugt, dass dieser Bereich der Halteplatte 31 durch eine Wärmebehandlung (z. B. Glühen) weicher als benachbarte Bereiche ist. Damit weist auch diese Halteplatte 31 einen Bereich 68 geringeren Biegewiderstands auf, die durch einen in Umfangsrichtung der Öffnung 65 und in radialer Richtung begrenzte Schwächung der Halteplatte 31 ausgeführt ist.

In Figur 9 ist eine weitere Variante einer Halteplatte 31 ausschnittweise dargestellt. Während bei dem Ausführung, gemäß Figur 3 oder auch gemäß Figur 4 der Bereich 68 (Aussparung 76) beispielsweise durch spanendes Bearbeiten hergestellt ist, ist gemäß diesem Ausführungsbeispiel die Aussparung 76 durch Umformen der Halteplatte 31 an ihrem Öffnungsrand 70 erzeugt. Wie in den vorangegangenen Beispielen gemäß Figur 2 bis Figur 7 weist auch dieses Ausführungsbeispiel eine Aussparung 76 mit einer verringerten Materialstärke d1 auf. Während die "normale", d. h. ursprüngliche Materialstärke der Halteplatte 31 eine Größe aufweist, die durch das Zeichen d2 angegeben ist, weisen die Aussparungen 76 eine Materialstärke d1 auf, die kleiner ist als d2. In dem Ausführungsbeispiel nach Figur 9 geht diese verringerte Materialstärke d1 mit einem anderen Radius der zentralen Öffnung 65 einher. Während der Radius der zentralen Öffnung 65 der benachbarten Bereiche 69 eine Größe R2 aufweist, weisen die Bereiche 68 eine Größe R1 auf. Im Ausführungsbeispiel nach Figur 9 weist die zentrale Öffnung 65 im Bereich 68 der verringerten Materialstärke d1 einen kleinereren Radius R1 ais an anderen Bereichen 69 der Öffnung 65 auf.

Bei den Ausführungsbeispielen nach den Figuren 2 bis 7 sowie 9 ist vorgesehen, dass im Bereich 68 der verringerten Materialstärke d₁ ein Abstand zwischen Außenring 35 und Halteplatte 31 in Achsrichtung a zumindest 0,1 mm beträgt.

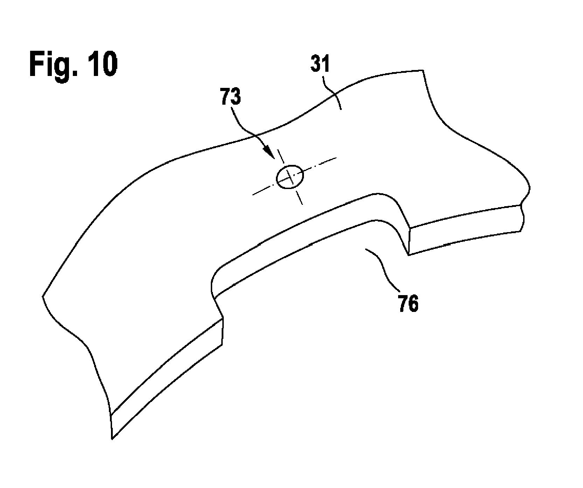

In Figur 10 ist ein weiteres Ausführungsbeispiel einer Halteplatte 31 ausschnittweise dargestellt. Während bei den vorangegangenen Ausführungsbeispielen gemäß Figur 2 bis Figur 7 und Figur 9 eine Aussparung 76 derart vorgesehen ist, dass eine Verringerung der Materialstärke im begrenzten Umfang vorgesehen ist, so ist im Ausführungsbeispiel nach Figur 10 der Bereich 68 durch eine totale Aussparung 76 gekennzeichnet. Es ist somit vorgesehen, dass im Bereich 68, d. h. bei der Aussparung 76 eine Verringerung der Materialstärke der Halteplatte 31 um 100% vorgesehen ist.

Insgesamt ist vorgesehen, dass eine Breite des Bereichs 68 verringerten Biegewiderstands in Umfangsrichtung in etwa 10mm und eine Tiefe des Bereichs 68 in Achsrichtung 2mm beträgt.

## Patentansprüche

1. Maschine mit einem Rotor (20), wobei der Rotor (20) mittels zumindest eines Festlagers (34) in einer Nabe (33) eines Gehäuses (13) gelagert ist, wobei das Festlager (34) als Wälzlager (28) ausgebildet ist und einen Außenring (35) aufweist, der mittels einer Halteplatte (31) am Gehäuse (13) befestigt ist, wobei zumindest ein Sefestigungselement (36) die Halteplatte (31) am Gehäuse (13) hält, **dadurch gekennzeichnet, dass** die Halteplatte (31) einen Bereich (68) radial zwischen dem Befestigungselement (36) und einer zentralen Öffnung (65) in der Halteplatte (31) aufweist, der einen geringeren Biegewiderstand als diesem Bereich (68) in Umfangsrichtung benachbarte Bereiche (69) aufweist.

2. Maschine nach Anspruch 1, **dadurch gekennzeichnet, dass** der geringere Biegewiderstand des Bereichs (68) durch eine in Umfangsrichtung der Öffnung (65) und in radialer Richtung begrenzte Schwächung der Halteplatte (31) ausgeführt ist.

3. Maschine nach Anspruch 1 oder 2, **dadurch gekennzeichnet, dass** die Schwächung durch eine gegenüber den benachbarten Bereichen (69) verringerte Materialstärke (d1) der Halteplatte (31) verwirklicht ist.

4. Maschine nach Anspruch 3, **dadurch gekennzeichnet, dass** im Bereich (68) der verringerten Materialstärke (d1) die zentrale Öffnung (65) einen kleineren Radius (R1) als an anderen Bereichen (69) der Öffnung (65) ausweist.

5. Maschine nach Anspruch 3 oder 4, **dadurch gekennzeichnet, dass** im Bereich der verringerten Materialstärke (d1) ein Abstand (d3) zwischen Außenring (35) und Halteplatte (31) in Achsrichtung mindestens 0,1 mm und maximal 100% der Materialstärke (d2) der Halteplatte (31) beträgt.

6. Maschine nach einem der vorstehenden Ansprüche, **dadurch gekennzeichnet, dass** der Bereich (68) verringerten Biegewiderstands durch eine Aussparung (76) verwirklicht ist.

7. Maschine nach Anspruch 6, **dadurch gekennzeichnet, dass** jedem Befestigungselement (36) eine Aussparung (76) zugeordnet ist,

8. Maschine nach einem der vorstehenden Ansprüche, **dadurch gekennzeichnet, dass** der Bereich (68) verringerten Biegewiderstands in Bezug zu einem Zentrum (M) der Nabe (33) eine Winkelbreite (α) in Umfangsrichtung von ca, 15° bis 65° aufweist.

9. Maschine nach einem der vorstehenden Ansprüche, **dadurch gekennzeichnet, das** der Bereich (68) verringerten Biegewiderstands im wesentlichen spiegelsymmetrisch zu einer Verbindungslinie (80) zwischen dem Zentrum (M) der Nabe (33) und dem Befestigungselement (36) angeordnet ist.

10. Maschine nach einem der vorstehenden Ansprüche, **dadurch gekennzeichnet, dass** der Außenring (35) einen Überstand (U) zur Nabe (33) von 0,04 bis 0,24 mm in axialer Richtung (a) aufweist.

11. Maschine nach einem der vorstehenden Ansprüche, **dadurch gekennzeichnet, dass** der Bereich (68) verringerten Biegewiderstands spanlos oder spanend hergestellt ist.

12. Maschine nach einem der vorstehenden Ansprüche, **dadurch gekennzeichnet, dass** sich der Bereich (68) verringerten Biegewiderstands und ein Duchgangsloch (73) für das Sefestigungselement (36) in Axialrichtung (a) gesehen nicht überschneiden.

13. Maschine nach einem der vorstehenden Ansprüche, **dadurch gekennzeichnet, dass** die Maschine (10) ein Erzeuger elektrischer Energie ist.
